# EUROPEAN PATENT SPECIFICATION

(11) **EP 1 194 220 B1**
(45) Date of publication and mention of the grant of the patent: **12.05.2004**
(21) Application number: 00936927.3
(22) Date of filing: 14.06.2000
(51) Int. Cl.: B01J 2/00, C05G 3/00

(54) **METHOD FOR THE COATING OF PARTICLES, THE USE OF A COATING SUSPENSION AND A COATED PRODUCT**
VERFAHREN ZUM BESCHICHTEN VON TEILCHEN VERWENDUNG VON EINER BESCHICHTUNGSSUSPENSION UND BESCHICHTETES PRODUKT.
PROCEDE DE REVETEMENT DE PARTICULES, UTILISATION D'UNE SUSPENSION DE REVETEMENT ET PRODUIT REVETU

(30) Priority: 14.06.1999 FI 991357
(43) Date of publication of application: 10.04.2002
(73) Proprietor: Kemira GrowHow Oy, 00180 Helsinki (FI)
(72) Inventor: LÖFGREN, Timo, FIN-02360 Espoo (FI); GRÖNFORS, Outi, FIN-02940 Espoo (FI); AHLNÄS, Thomas, FIN-48130 Kotka (FI)
(74) Representative: Saijonmaa, Olli-Pekka
(86) International application number: PCT/FI2000/000533
(87) International publication number: WO 2000/076649

(56) References cited:
- DE-A- 2 122 265
- GB-A- 2 011 367
- US-A- 4 391 733
- US-A- 5 169 443
- US-A- 5 628 813
- US-A- 5 735 946
- DATABASE WPI Week 199022, Derwent Publications Ltd., London, GB; AN 1990-169059, XP002965609 & JP 2 111 686 A (CENTRAL GLASS CO LTD) 24 April 1990 & PATENT ABSTRACTS OF JAPAN & JP 02 111 686 A (CENTRAL GLASS CO LTD)

## Description

The object of this invention is a method for coating a product in the form of a particle by using a coating suspension containing an organic phase and solid inorganic particles. The invention also relates to the use of the suspension for coating the said product and to a coated particulate product. The products to be coated include fertilizer granules in particular, whereupon the purpose of the coating is to protect the granules against wetting or caking.

To prevent caking or to delay wetting, a granulated fertilizer is generally treated with an oil-based product that, in addition to oil, can also contain wax, polymers, a fatty amine or other surface-active substances. Coating is carried out, for example, so that a coating agent at a temperature of 80 °C is sprayed through a nozzle onto the surface of the granulated fertilizer at a temperature of about 30-50 °C in a rotating drum. Finally, the fertilizer is powdered with talc or another finely ground mineral.

Patent publication DE 21 22 265 discloses a solid coating agent for fertilizer granules, consisting of inorganic powder and a hydrophobic, organic component. The inorganic powder can be kaolin, talc or silica gel. The hydrophobic component is an organic amine, such as stearyl amine, or a salt or amide formed by organic amine and mineral acid or organic acid, and it can also contain mineral oil. The coating is prepared by mixing the powder with a melted organic medium, and then the mixture is solidified into a particle size of 0.2 - 3 mm. The coating is added to the hot granules by mixing, so that it melts and spreads on the surface of the granules.

In fertilizers that dissolve in a delayed or controlled manner, the layers of coating are thicker than usual and they generally contain a lot of organic binding material. Proposals have been made to use inorganic filling agents, such as talc or micaceous minerals also in these coatings. Examples of these include the patent publications BE 869577 781201 (CAN 91:4535), JP 02111686 (CAN 113:190370), and JP 09194280 (CAN 127:175943), in which the portion of mineral in the polymeric coating matrix varies within 0.2 - 50 %.

Considering the storage and use of fertilizers in tropical or subtropical conditions in particular, it would be better to coat them with a better moisture barrier than today without having to rely on very thick layers of coating, however, or on expensive coating agent compositions. Coatings containing a lot of waxes easily solidify on the surface of the fertilizer granules and form uneven blotches without providing a sufficiently integral protective layer against wetting. When used in abundance, a wax-containing coating agent in a molten state can provide a fairly integral surface, but, in addition to the problems with handling the product, one disadvantage is that, when solidifying, the coating shrinks and cracks are formed. New solutions are also required to prevent caking. When a granular fertilizer is coated with an oil-based anti-caking agent, the oil tends to be absorbed into the pores of the fertilizer. In that case, the consumption of the coating agent increases and the amount on the surface of the fertilizer granule can remain too low. It is not always possible to increase the amount of talc or another powdering agent as would be necessary to prevent wetting or caking, because this would result in a dusty fertilizer.

The purpose of the invention is to provide a new solution for coating a particulate product, which can avoid the prior art problems mentioned above. The method according to the invention is characterized in that a mineral with layer structure is ground in an organic, liquid phase, so that it becomes delaminated, and that the suspension containing the organic phase and the obtained plate-like mineral particles; which have become smaller in size, is brought onto the surface of the particle products.

A micro grinder, such as a pearl mill, can be used to perform the delaminating grinding of the mineral. In grinding, the mineral tends to split in the direction of the layers, resulting in bladed particles that are thinner than before but, otherwise, either roughly keep their dimensions or are at least ground to a considerably lesser extent than in the direction of the layers.

The delaminating micro grinding of lamellar silicate carried out in a liquid phase is a method known per se from the US patent 4 391 733, in which the grinding causes a growth in the specific surface area of the particles. Deviating from the invention, however, the publication does not relate to the coating of particles but grinding is an intermediate stage in a process, which is used to manufacture a product that is mainly intended for a paper filling agent or a coat pigment.

The thin, plate-like mineral particles of the coating provided in accordance with the invention protect the particulate products against wetting by lengthening the way of water molecules through the layer of coating and, thus, by decelerating the diffusion of water. At the same time, they also prevent the salts contained by the particle products from straying to the points of contact between the particles during storage, preventing the formation of salt bridges and thus decreasing the caking of the product.

When porous fertilizer granules are coated with an oil-based suspension, the suspension containing micro-ground particles, provided in accordance with the invention, is not absorbed into the granules as well as the one containing no particles. The size of the delaminated particles is closer to the size of the surface pores of the fertilizer granules, whereupon they are more efficient in preventing the excessive absorption of the warm, liquid oil phase into the pores than coating particles, which are not delaminated.

Delaminated particles also increase the elasticity of the coating layer more efficiently than the same volume fraction of larger coating particles. These factors contribute to the fact that a certain amount of the coating suspension according to the invention, which is sprayed onto the surface of the fertilizer, is on the surface of the granules in the form of a slippery layer that is as plastic as possible, when the fertilizer moves in the coating device. In this way, the coating can be spread onto the surface of the fertilizer granules in the form of a thicker and more even protective layer than what would be possible by using the same raw material without the delaminating grinding according to the invention.

When a coating is ground in the delaminating manner according to the invention, particles do not block the nozzles of coating sprays as easily as when coatings are applied, which contain coarser particles.

Normally, a mineral coating is cheaper than oils and waxes; therefore, a thicker layer of coating can be achieved at the same price.

In the coating, delaminated particles also work as reinforcing material, so they are more effective in preventing the formation of contraction cracks than other coating particles and, through this, they also ensure a better moisture barrier.

Without the delaminating micro grinding according to the invention, mineral particles tend to sediment quickly from the coating suspension, especially when the coating is warm and the viscosity of the oily medium is low. In the suspension obtained according to the invention, on the contrary, sedimentation is minor, whereupon its stability is good and it can be transported from the grinding to a coating stage that is performed somewhere else.

The laminar minerals that can be delaminated and are usable for the invention include composite silicates. These include kaolin minerals, such as kaolinite; three-layer silicates, such as talc or pyrophyllite; micaceous minerals, such as biotite, phlogopite, muscovite, illite, and sericite; three-layer silicates with an expansible structure, such as smectites (among others, montmorillonite, hectorite, and saponite), vermiculite; four-layer silicates, such as chlorite; and other phyllosilicates, one of which is sepiolite. Talc is a preferable delaminating mineral that suits the coating of fertilizers.

The starting point of micro grinding in liquid consists of a dry-ground mineral that corresponds to the one that has been used for powdering fertilizer granules, among others. Delaminating grinding mainly makes the particles of the mineral with layer structure thinner. The medium size of the particles obtained from grinding, as evaluated with the aid of an equivalent spherical diameter, is within 0.5 - 20 µm, preferably 0.5 - 10 µm. In that case, we are talking about the geometrical mean of the average width, length, and thickness of the particles. Thus for a flat particle, the dimensions of the plane surface can also be larger than 20 µm. In practice, grinding can be observed, among other things, by that the mineral suspension in a ground state is less liquid, its sedimentation essentially decreases, and its outward appearance also changes.

The liquid organic phase, in which the delaminating micro grinding is carried out, preferably consists of oil, mineral oil in particular, or wax or a mixture of oil and wax. Generally, the grinding temperature is within 30 - 120 °C, preferably within 50 - 90 °C. It is required that the organic phase in the grinding temperature is liquid. Many oils, for example, are solid at temperatures lower than 40 °C. The wax that is used can be a mineral-based or organic wax, a synthetic or technical wax, such as the esters or amides formed by macromolecular fatty acids, or waxy polymeric compounds, such as polyethylene wax, microcrystalline wax, etc. Generally, the oils and waxes and their mixtures that are suitable for fertilizer coatings can be used in the coatings according to the invention.

In grinding, it is possible to use grinding additives that are added to the organic phase, but on the basis of preliminary observations, they do not necessarily improve the grinding result. The additives improve the fluidity of the suspension that is ground, but they can also facilitate the travel of the particles through the grinder, as a result of which a larger number of deficiently delaminated mineral cakes can remain in the suspension than when grinding without the additive. The possible additives of the organic phase include non-hydrophilic organic acids, alcohols, esters, amines, amides or their mixtures.

The suspension obtained from the micro grinder can be used as coating material as such. According to one preferred application of the invention, in order for the grinding to be more efficient, the concentration of the minerals in the grinding stage is higher than in the final coating suspension. In that case, the suspension is obtained by mixing oil and waxes or other possible blend components, such as polymers and amines, with the product obtained from the grinder. The consistency of the coating suspension preferably allows them to be sprayed or atomised, at a temperature of about 60 - 100 °C, preferably about 80 - 85 °C, onto the particle products that are to be coated. After coating, the particles can be powdered as normally, if so desired.

Particles coated according to the invention are, above all, fertilizer granules with a typical particle size of about 3 - 4 mm. The components of the granules include nitrogen, P₂O₅, K₂O, and the mixtures thereof. Depending on the composition, the fertilizers can be hygroscopic or they can form cakes, or they can have both properties simultaneously. The granules can absorb part of the organic phase of the coating suspension, even as the phase at least partly solidifies, forming a protective layer on the surface of the granules jointly with the delaminated mineral particles. As already mentioned, the thin delaminated particles decrease the absorption of oil and thus reduce the consumption of the coating suspension.

Furthermore, the invention comprises the use of the coating suspension and a coated product in the form of a particle, regarding which we refer to the Claims, especially Claims 13 -19.

### Example 1, delaminating grindings of talc

Talc was delaminated in oil by using various surface-active substances. 0, 0.2, 0.5 or 2 parts by weight of additives were dissolved in 80, 79.8, 79.5 or 78 parts by weight of oil, heating at the same time. 20 parts by weight of Finntalk P 40 talc were dispersed in the mixture. A 600 g batch of the obtained suspension was heated to 80 °C and ground by a laboratory pearl mill provided with a steel agitator; comprising 125 ml grinding bodies of 1.0-1.6 mm zirconium oxide pearls. Grinding was carried out by recycling the suspension continuously through the mill for 15 minutes. Grinding was successful on all additives tested. Grinding without the additive was not possible because the hose pump used in pumping would block up.

The test samples were aged for about one month at the room temperature. The sample that had not been delaminated exhibited a quick sedimentation of talc onto the bottom while the suspensions that had been delaminated according to the invention only exhibited a relatively small amount of oil creaming on their surface, when aged. The test results are shown in Table 1 below. The percentage of oil creaming refers to the portion of the pure oil, which was separated onto the surface of the aged sample, of the total volume of the sample.

**Table 1**

| **Test No.** | **Grinding additive** | **Amount, weight-%** | **Grinding** | **Oil creaming %** |
|---|---|---|---|---|
| 1 | Noram S | 2 | good | 28 |
| 2 | (No additive) | - | (the hose pump blocked up) | |
| 3 | Caprol 10G100 | 2 | good | 30 |
| 4 | " | 0.5 | good | 18 |
| 5 | " | 0.2 | good | 12 |
| 6 | Noram S | 0.5 | good | 10 |
| 7 | Atlox 4914 | 0.5 | good | 24 |
| 8 | Hypermer E476 | 0.5 | good | 17 |
| 9 | Atlox 4912 | 0.5 | good | 24 |
| 10 | Hypermer B261 | 0.5 | good | 18 |
| 11 | Capmul GMO-K | 0.5 | good | 10 |
| 12 | GMS-50 | 0.5 | good | 6 |

The surface-active substances used in the tests were various commercial oil-soluble surface-active substances. They included both polymeric and non-polymeric products and products intended for technical applications and for foodstuffs:

| | |
|---|---|
| Atlox 4912 | Polymeric product, a block copolymer |
| Atlox 4914 | Polymeric product, a modified polyester |
| Capmul GMO-K | Glycerol mono-oleate |
| Caprol 10G100 | Polymeric product: polyglycerol oleate |
| GMS-50 | Glycerol monostearate |
| Hypermer E476 | Polymeric product |
| Hypermer B261 | Polymeric product |
| Noram S | Fatty acid amine. |

First, we tried to analyse the particle size distribution of the suspensions obtained from the grindings by using a Malvern Mastersize device, in which the suspension is directed through a detector unit based on the transmission of light. It proved to be that the average particle size, given by the device for the ground sample was 97 % of a non-ground product, even though the suspension had gone through visible changes. The result might be caused by the lamellar particles turning in the direction of flow in the measurement, whereupon the decrease of size cannot be seen very well. However, scanning electron microscopic images showed that, compared with the particles that were not ground, the ground particles were very thin. Thus the talc had been delaminated.

### Example 2

A suspension was ground in accordance with Example 1, containing 25 by parts by weight of talc, 75 parts by weight of mineral oil, and 1 weight-% of a fatty amine of the amount of the suspension.

### Example 3, a coating suspension

The oily suspensions of the delaminated talc obtained in Example 1 were used to make fertilizer coatings by mixing and homogenizing, at a temperature of 80 °C, 90 parts per weight of the talc-oil suspension with 10 parts per weight of paraffin wax.

The functioning of the samples in preventing water penetration was ensured by measuring the diffusion of water through a membrane made from them by using an FTIR device. During the measurement that continued overnight, no water had penetrated from the top of the membrane to the measuring device below.

### Example 4, coating of fertilizer

The absorption of grinding products made according to Examples 1 and 2 into the fertilizer was tested so that a finely ground mixed fertilizer 16-0-31 (N:P₂O₅:K₂O) was moulded into 4 g pellets with a diameter of 30 mm. The coating suspensions were heated to a temperature of 85 °C and the pellets to 45 °C. The pellets were weighed and an excess amount of the warm coating suspension was laid on them. After 2 minutes, the excess suspension was wiped away with a soft paper cloth. When weighed again, it was discovered that the weight of the fertilizer pellets had increased by about 50 mg on the average. 1 ml of water was pipeted onto the pellets that had been cooled to room temperature. The absorption of water and any changes on the surface of the pellet were observed. The water drop was absorbed immediately into the uncoated pellet, but on the coated pellets, it remained more or less bright for 10 - 20 min before being fully absorbed into the pellet or evaporating into the air.

A corresponding test was also conducted on a mixture ratio of 15-15-15 of the fertilizer components.

### Example 5, coating suspensions

Suspensions containing delaminated talc, obtained from the grindings of Examples 1 and 2, were heated; mineral wax was melted into and more oil was mixed with the suspension, so that the compositions shown in Table 2 were obtained.

**Table 2**

| **Suspension No.** | **Talc, weight-%** | **Wax, weight-%** | **Oil, weight-%** |
|---|---|---|---|
| 1 | 2.5 | 10 | 87.5 |
| 2 | 2.5 | 10 | 87.5 |
| 3 | 5 | 10 | 85 |
| 4 | 5 | 10 | 85 |
| 5 | 5 | 20 | 75 |
| 6 | 5 | 20 | 75 |
| 7 | 20 | 0 | 80 |
| 8 | 25 | 0 | 75 |

The functioning of the coating agent samples in moisture prevention was ensured by measuring the diffusion of water through a membrane made from them by using an FTIR device. During the measurement that continued overnight, no water had penetrated from the top of the membrane to the measuring device below.

### Example 6, grinding of talc

1 part by weight of hydrogenated tallow fatty amine was dissolved in 74 parts of weight of oil, heating the mixture at the same time. 25 parts of weight of Finntalk P 40 talcum powder was dispersed in the mixture. The obtained suspension, the temperature of which was about 70 °C, was delaminated in a 1-litre Netzsch LME 1 pearl mill. 80 % of the grinding space of the mill had been filled with 1.6 - 2.5 mm zirconium oxide pearls. The rotation speed of the mixer was 2500 r/min. 4.1 kg of talcum suspension was pumped into the mill per hour by using a Mohno-type pump.

### Example 7

Part of the product of the previous example was ground in the same equipment for the second time, the feed being 2.6 kg/h. The grinding succeeded with no difficulties.

### Example 8

### a) Reference sample

Non-ground Finntalc P40 talc was dispersed in oil to form a 40 % dispersion by using a high-shear dispersing device. Thereafter, organic matter was removed from the suspension by burning it to a constant weight at 400 °C. The burned talcum particles were mixed with epoxy resin as homogeneously as possible. The resin was allowed to cure, its surface was honed smooth, and a picture of the surface was taken by using a SEM device. In the images, the majority of the talc particles on the surface are shown in cross-section, whereupon their shape and degree of delamination are perceptible.

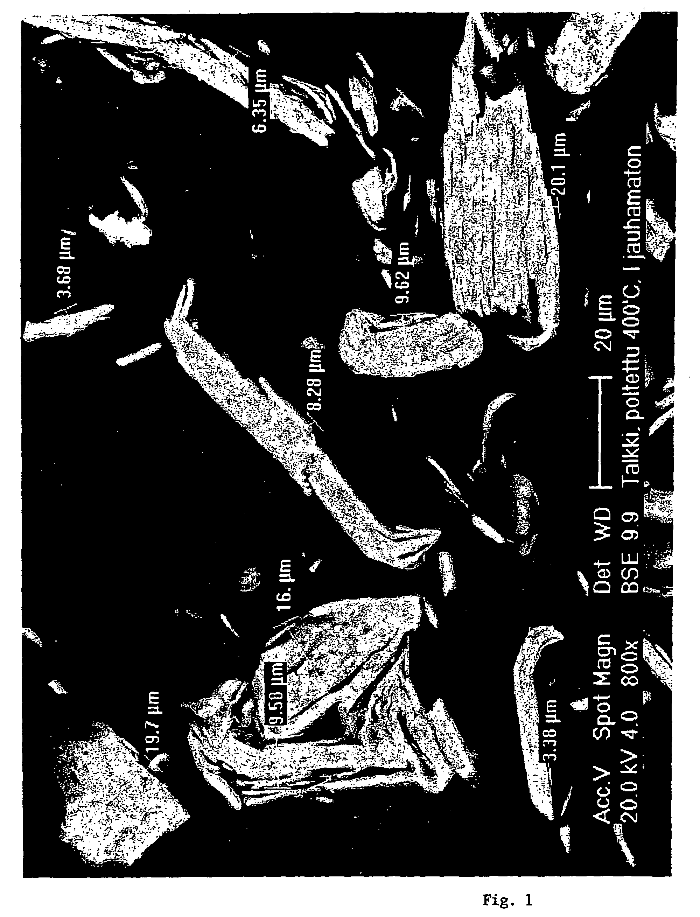

The appended Fig. 1 depicts non-ground talc. When examining the figure, it should be noted that the treatment given to the talc, i.e., dispersion, burning, mixing with epoxy, might have caused deforming and partial delamination of the talc; in other words, the figure is not necessarily equivalent to the original talc.

### b) Talc delaminated by grinding

Non-ground talc Finntalc P40 was dispersed in oil to form a 40 % suspension by using a high-shear dispersion device. The suspension at 40 °C was fed without additives at a capacity of 2.7 kg/h into a pearl mill that was the same as in Example 1. The grinding succeeded with no difficulties. The delaminated product was obtained at a temperature of 58 °C. The viscosity before grinding was 300 mPas and after delamination about 8000 mPas.

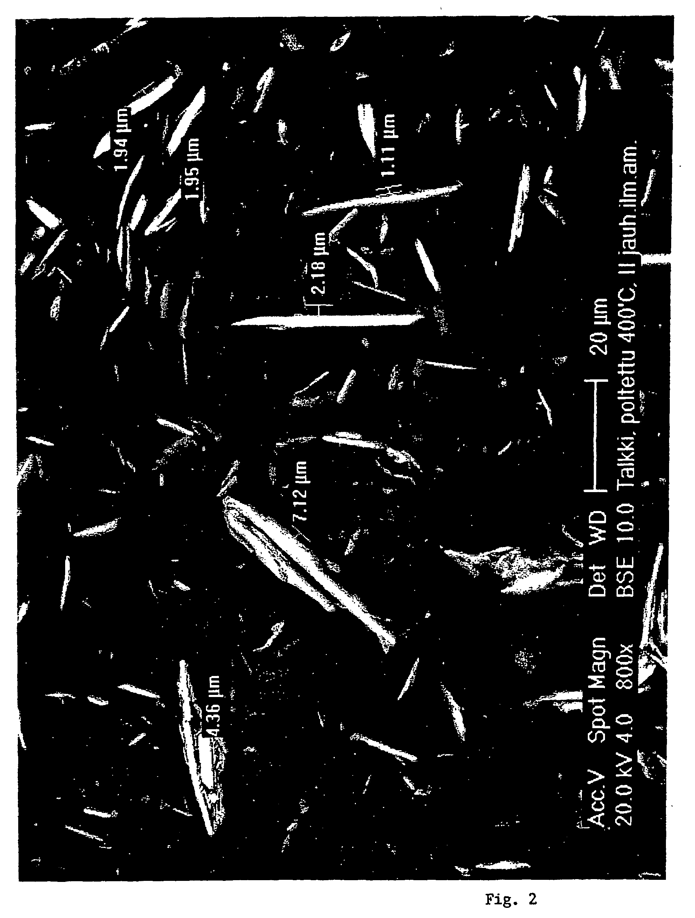

Then the suspension was burned, the burned talc particles were mixed with epoxy resin, the resin was cured and honed, and the surface was photographed with the SEM device in the same way as the reference sample. If we compare the obtained Fig. 2 with the Fig. 1 of the reference sample, we can see that the thick talc packs have disappeared and almost all the particles seem to have a stick-like cross section, as desired, indicating the delaminating effect of the grinding, as the talc was otherwise treated in the same way as the reference sample.

### Example 9

A suspension was prepared by the high-shear dispersion device, containing 40 parts of weight of non-ground Finntalc P40 talc per 60 parts of weight of oil and, as a grinding additive, 0.5 parts of weight of fatty amine Noramin S. The suspension at 70 °C was fed at a capacity of 2.6 kg/h into a pearl mill, which was the one used in Example 1. The grinding succeeded with no difficulties.

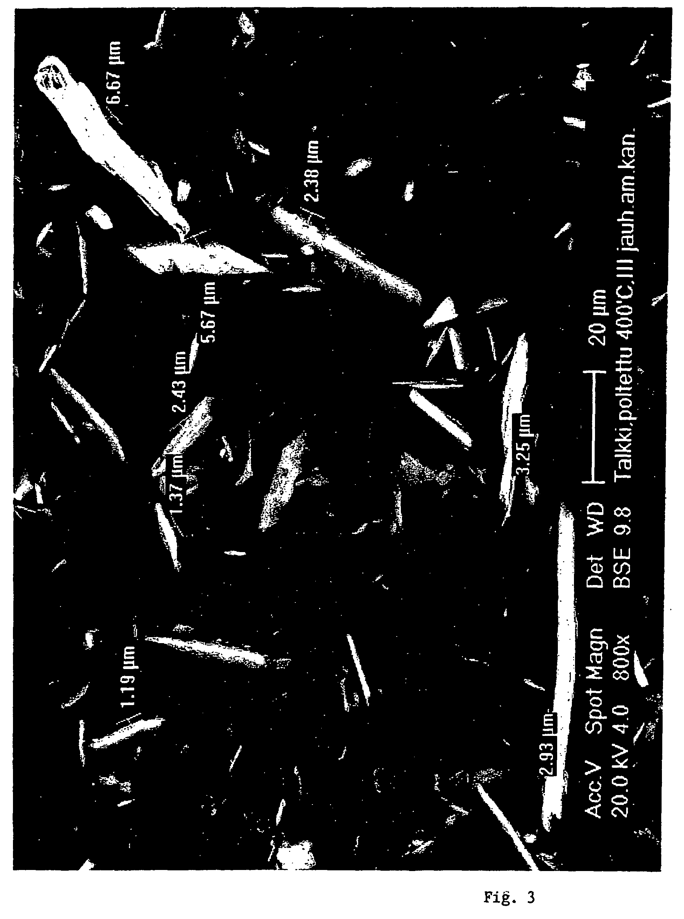

The ground suspension was burnt, the burnt talc particles were mixed with epoxy resin, the resin was cured and honed, and the surface was photographed with the SEM device in the same way as in Example 8. Fig. 3 shows the degree of grinding compared with Fig. 1 of the reference sample.

### Example 10, coating of fertilizer

Test coating No. 9 was carried out as follows: talc was delaminated by grinding in accordance with Example 8. Technical wax and mineral oil were admixed at 80 °C, so that the following composition was obtained: delaminated talc 5, wax 10, fatty amine 0.2, and mineral oil 84.4 weight-%.

The coating suspension was tested by coating 20 kg of granular mixed fertilizer that had been heated to 40 °C, compound fertilizer 15-15-15 (N:P₂O₅:K₂O), in a concrete mixer so that the desired amount of an 80 °C warm test-coating was sprayed onto the fertilizer rotating in the mixer. Finally, dry Finntalk P40 talc was admixed as a powdering agent. A fraction between 2.8 and 3.15 mm was screened from the fertilizers, and the adsorption of moisture of the fraction was measured after 2, 4, and 6 hours at a relative humidity of 80 %. The results according to the following Table 3 were obtained (increase in weight, %):

**Table 3**

| **Suspension** | **Time:** | **2h** | **4h** | **6h** |
|---|---|---|---|---|
| No coating (reference) | | 2.5 | 4.9 | 7.3 |
| 9*) | | 0.2 | 0.7 | 2.5 |
| 9**) | | 0.2 | 0.4 | 1.6 |

| | | | | |
|---|---|---|---|---|
| *) 0.6 weight-% of coating agent + 0.7 % of powdering agent | | | | |
| **) 0.75 weight-% of coating agent + 0.9 % of powdering agent | | | | |

Thus, the test products according to the invention exhibited a clearly lower absorption of humidity than the reference examples. For the sake of comparison, we examined a fertilizer sample coated with an oil-based anti-caking agent according to prior art, obtained from a fertilizer plant. The increase in weight was 2.5, 4.9, and 7.0 %. Thus the conventional coating composition did not prevent moisture from absorbing into the fertilizer, in contrast to the coating suspension according to the invention.

Caking of the samples was also examined. In the one-day test (1 d), the uncoated fertilizer left 18 weight % of cakes on the screen, while the corresponding figures of all the other samples were 0.5 weight-% maximum.

### Example 11, coating of fertilizer

Talc suspension delaminated according to Example 1 was heated, mineral wax was melted into it, and oil was added so that the compositions shown in Table 3 were obtained. The coating suspensions at 80 °C were atomised onto the surface of the 40 °C-fertilizer 15-15-15 (N:P₂O₅:K₂O) at 7.5 kg/ton, and the coated fertilizer was powdered with dry talcum powder in amounts of 3 kg/ton. The moisture absorption of the samples during 6 hours was measured according to the previous example immediately after coating, and again after a one month storage time. Caking was tested so that the fertilizer samples were first kept at a relative humidity of 90 % at 33 °C for 2 hours. Then they were bagged up in 90 ml portions and kept for 24 hours under a pressure of 1 kp/cm². The caking result indicates the percentage of the sample that remained on the 7.1 mm screen.

The reference sample 1 was a commercial coating intended for decreasing the absorption of humidity, and the reference coating 2 was an oil-based coating agent used in industrial scale. Furthermore, reference coatings 3 and 4 containing oil and wax but no delaminated talc were prepared.

The test results in Table 4 indicate that the reference sample 1 gives protection against the absorption of humidity but does not prevent caking. The reference sample 2, instead, which was developed against caking, prevented caking but had no impact against the absorption of humidity. The coatings containing wax and oil could also be used to lower the absorption of humidity, but also in that case, caking constituted a problem. The suspensions containing delaminated talc according to the invention provided prevention both against the absorption of humidity and caking very well.

**Table 4**

| **Coating suspension** | **Talc** | **Oil** | **Wax** | **Absorption of humidity** | **Absorption of humidity, stored** | **Caking when wet** |
|---|---|---|---|---|---|---|
| | % | % | % | % | % | % |
| Uncoated (reference) | | | 0 | 5.2 | - | 55 |
| Reference coating 1 | | | | 0.4 | 2.2 | 37 |
| Reference coating 2 | | | | 4.8 | 5.4 | - |
| 7 | 20 | 80 | 0 | 1.9 | 2.7 | 3 |
| 5 | 5 | 75 | 20 | 0.9 | 2.2 | 3 |
| 3 | 5 | 85 | 10 | 1.2 | 2.2 | 4 |
| Reference coating 3 | 0 | 80 | 20 | 0.4 | 1.8 | 37 |
| Reference coating 4 | 0 | 90 | 10 | 0.3 | 1.9 | 16 |

### Example 12

Example 11 was repeated by using a suspension of the delaminated talc prepared according to Example 2. The results are in Table 5. By using the talc delaminated according to the invention, good protection was achieved against both the absorption of humidity and caking. It was observed that a wax coating formulated with the aid of delaminated talc formed clearly less cakes than the compositions containing wax, according to the prior art.

**Table 5**

| **Coating suspension** | **Talc** | **Oil** | **Wax** | **Absorption of humidity** | **Caking** | **Caking when wet** |
|---|---|---|---|---|---|---|
| | **%** | **%** | **%** | **%** | **%** | **%** |
| Uncoated (reference) | | | 0 | 5.2 | 46 | *55* |
| Reference coating 1 | | | | 0.4 | 39 | 37 |
| Reference coating 2 | | | | 4.8 | 1 | - |
| 8 | 25 | 75 | 0 | 2.9 | 0 | 1 |
| 6 | 5 | 75 | 20 | 0.9 | 1 | 2 |
| 4 | 5 | 85 | 10 | 0.5 | 3 | 2 |
| Reference coating 3 | 0 | 80 | 20 | 0.4 | 37 | 37 |
| Reference coating 4 | 0 | 90 | 10 | 0.3 | 15 | 16 |

## Claims

1. A method for coating a particulate product by using a coating suspension containing an organic phase and solid inorganic particles, **characterized in that** mineral particles with layer structure are ground in a liquid organic phase so that the particles become delaminated, and that the resulting suspension containing the organic phase and the obtained plate-like mineral particles of reduced thickness is brought onto the surface of the particulate product.

2. A method according to Claim 1, **characterized in that** the mineral to be ground is talc, kaolin or mica, preferably talc.

3. A method according to Claim 1 or 2, **characterized in that** the product particles to be coated consist of a hygroscopic and/or caking material.

4. A method according to any of the preceding Claims, **characterized in that** the product particles to be coated are fertilizer granules.

5. A method according to any of the preceding Claims, **characterized in that** the organic phase, in which the delaminating grinding is carried out, contains oil, such as mineral oil, and/or wax.

6. A method according to Claim 5, **characterized in that** the organic phase is liquid at the grinding temperature, but when cooled, solidifies mainly in a solid state onto the surface of the product particles.

7. A method according to any of the preceding Claims, **characterized in that** the grinding temperature is 30 -120 °C, preferably 50 - 90 °C.

8. A method according to any of the preceding Claims, **characterized in that** the mineral is ground into a particle size that corresponds to an equivalent spherical diameter, which is 20 µm maximum, preferably 10 µm maximum.

9. A method according to any of the preceding Claims, **characterized in that** grinding is performed using a micro grinder, such as a pearl mill.

10. A method according to any of the preceding Claims, **characterized in that** the suspension that is obtained as a result of grinding is diluted with an organic liquid before the suspension is brought onto the product particles.

11. A method according to any of the preceding Claims, **characterized in that** the suspension is brought onto the product particles by spraying or atomising it through nozzles.

12. A method according to any of the preceding Claims, **characterized in that** the product particles coated with the suspension are powdered with hydrophobic powder, preferably talc.

13. The use of a suspension for coating a particulate product, the suspension containing 25 - 99.8 weight-% of a liquid organic phase and 75 - 0.2 weight-% of plate-like particles, which were obtained by the delaminating grinding of a mineral with layer structure in the organic phase, and the particle size of which corresponds to an equivalent spherical diameter, which is 20µm maximum.

14. The use of a suspension according to Claim 13, **characterized in that** the suspension consists of 25 - 99, preferably 35 - 90 weight-% of an organic phase and 75 - 1, preferably 65 - 10 weight-% of plate-like mineral particles.

15. The use of a suspension according to Claim 13 or 14, **characterized in that** the mineral is talc.

16. The use of a suspension according to any of Claims 13 to 15, **characterized in that** the organic phase contains oil, such as mineral oil, and/or wax.

17. The use of a suspension according to any of Claims 14 to 16 for coating hygroscopic and/or caking fertilizer granules.

18. A coated particulate product, **characterized in** consisting of particles, which are coated with plate-like particles, which were obtained by the delaminating grinding of a mineral with layer structure in the organic phase, and the particle size of which corresponds to an equivalent spherical diameter, which is 20µm maximum, and with an organic binding material.

19. A product according to Claim 18, **characterized in** consisting of fertilizer granules, which are provided with a hydrophobic coating that contains plate-like talc particles and oil and/or wax as a binging material.

## Patentansprüche

1. Verfahren zur Beschichtung eines partikulären Produktes unter Verwendung einer Beschichtungssuspension, die eine organische Phase und feste anorganische Partikel enthält, **dadurch gekennzeichnet, dass** Mineralpartikel mit Schichtstruktur in einer flüssigen organischen Phase gemahlen werden, so dass die Partikel delaminiert werden, und dass die resultierende Suspension, die die organische Phase und die erhaltenen plättchenartigen Mineralpartikel von verringerter Dicke enthält, auf die Oberfläche des partikulären Produktes gebracht werden.

2. Verfahren nach Anspruch 1, **dadurch gekennzeichnet, dass** es sich bei dem zu mahlenden Mineral um Talk, Kaolin oder Glimmer, bevorzugt um Talk handelt.

3. Verfahren nach Anspruch 1 oder 2, **dadurch gekennzeichnet, dass** die zu beschichtenden Produktpartikel aus einem hygroskopischen und/oder zusammenbackenden Material bestehen.

4. Verfahren nach irgendeinem der vorhergehenden Ansprüche, **dadurch gekennzeichnet, dass** die zu beschichtenden Produktpartikel Düngemittelgranulate sind.

5. Verfahren nach irgendeinem der vorhergehenden Ansprüche, **dadurch gekennzeichnet, dass** die organische Phase, in der das delaminierende Mahlen durchgeführt wird, Öl, wie Mineralöl, und/oder Wachs enthält.

6. Verfahren nach Anspruch 5, **dadurch gekennzeichnet, dass** die organische Phase bei der Mahltemperatur flüssig ist, sich aber beim Abkühlen hauptsächlich in einen festen Zustand auf der Oberfläche der Produktpartikel verfestigt.

7. Verfahren nach irgendeinem der vorhergehenden Ansprüche, **dadurch gekennzeichnet, dass** die Mahltemperatur 30 - 120°C, bevorzugt 50 - 90°C beträgt.

8. Verfahren nach irgendeinem der vorhergehenden Ansprüche, **dadurch gekennzeichnet, dass** das Mineral zu einer Partikelgröße vermahlen wird, die dem äquivalenten Kreisdurchmesser mit einem Maximum von 20 µm, bevorzugt 10 µm entspricht.

9. Verfahren nach irgendeinem der vorhergehenden Ansprüche, **dadurch gekennzeichnet, dass** das Mahlen in einer Mikromühle, wie einer Perlmühle durchgeführt wird.

10. Verfahren nach irgendeinem der vorhergehenden Ansprüche, **dadurch gekennzeichnet, dass** die Suspension, die als Ergebnis des Mahlens erhalten wird, mit einer organischen Flüssigkeit verdünnt wird, bevor die Suspension auf die Produktpartikel gebracht wird.

11. Verfahren nach irgendeinem der vorhergehenden Ansprüche, **dadurch gekennzeichnet, dass** die Suspension auf die Produktpartikel durch Sprühen oder Verdüsen durch Düsen auf die Produktpartikel gebracht wird.

12. Verfahren nach irgendeinem der vorhergehenden Ansprüche, **dadurch gekennzeichnet, dass** die Produktpartikel, die mit der Suspension beschichtet sind, mit einem hydrophoben Pulver, bevorzugt Talk, gepudert werden.

13. Verwendung einer Suspension zur Beschichtung eines partikulären Produktes, wobei die Suspension 25 - 99,8 Gew.-% einer flüssigen organischen Phase und 75 - 0,2 Gew.-% plättchenartige Partikel enthält, die erhalten werden durch delaminierendes Mahlen eines Minerals mit Schichtstruktur in der organischen Phase, und worin die Partikelgröße davon einem äquivalenten Kreisdurchmesser mit einem Maximum von 20 µm entspricht.

14. Verwendung einer Suspension nach Anspruch 13, **dadurch gekennzeichnet, dass** die Suspension aus 25 - 99, bevorzugt 35 - 90 Gew.-% einer organischen Phase und 75 - 1, bevorzugt 65 - 10 Gew.-% eines plättchenartigen Mineralproduktes besteht.

15. Verwendung der Suspension nach Anspruch 13 oder 14, **dadurch gekennzeichnet, dass** das Mineral Talk ist.

16. Verwendung einer Suspension gemäß irgendeinem der Ansprüche 13 bis 15, **dadurch gekennzeichnet, dass** die organische Phase Öl, wie Mineralöl, und/oder Wachs enthält.

17. Verwendung einer Suspension nach irgendeinem der Ansprüche 14 bis 16 zur Beschichtung von hygroskopischen und/oder zusammenbackenden Düngemittelgranulaten.

18. Beschichtetes partikuläres Produkt, **dadurch gekennzeichnet, dass** es aus Partikeln besteht, die mit plättchenartigen Partikeln, die erhalten werden durch delaminierendes Mahlen eines Minerals mit Schichtstruktur in einer organischen Phase, deren Partikelgröße einem äquivalenten Kreisdurchmesser mit einem Maximum von 20 µm entspricht, und einem organischen Bindemittel beschichtet sind.

19. Produkt nach Anspruch 18, **dadurch gekennzeichnet, dass** es aus einem Düngemittelgranulat besteht, das mit einer hydrophoben Beschichtung versehen ist, die plättchenartige Talkpartikel und Öl und/oder Wachs als Bindemittel enthält.

## Revendications

1. Procédé pour revêtir un produit particulaire par utilisation d'une suspension de revêtement contenant une phase organique et des particules minérales solides, **caractérisé en ce que** les particules minérales ayant une structure stratifiée sont broyées dans une phase organique liquide de façon que les particules deviennent déstratifiées, et **en ce que** la suspension résultante, contenant la phase organique et les particules minérales plaquettaires obtenues ayant une épaisseur réduite, est appliquée sur la surface du produit particulaire.

2. Procédé selon la revendication 1, **caractérisé en ce que** le minéral devant être broyé est le talc, le kaolin ou le mica, de préférence le talc.

3. Procédé selon la revendication 1 ou 2, **caractérisé en ce que** les particules à revêtir sont constituées d'un matériau hygroscopique et/ou agglomérant.

4. Procédé selon l'une quelconque des revendications précédentes, **caractérisé en ce que** les particules à revêtir sont des granulés de fertilisant.

5. Procédé selon l'une quelconque des revendications précédentes, **caractérisé en ce que** la phase organique, dans laquelle le broyage déstratifiant est mis en oeuvre, contient une huile, telle qu'une huile minérale, et/ ou une cire.

6. Procédé selon la revendication 5, **caractérisé en ce que** la phase organique est liquide aux températures de broyage, mais, quand elle est refroidie, elle se solidifie principalement dans un état solide sur la surface des particules.

7. Procédé selon l'une quelconque des revendications précédentes, **caractérisé en ce que** la température de broyage est de 30 à 120°C, de préférence de 50 à 90°C.

8. Procédé selon l'une quelconque des revendications précédentes, **caractérisé en ce que** le minéral est broyé jusqu'à une granulométrie qui correspond à un diamètre sphérique équivalent qui est de 20 µm au maximum, de préférence de 10 µm au maximum.

9. Procédé selon l'une quelconque des revendications précédentes, **caractérisé en ce que** le broyage est réalisé au moyen d'un micro-broyeur, tel qu'un broyeur à perles.

10. Procédé selon l'une quelconque des revendications précédentes, **caractérisé en ce que** la suspension qui est obtenue en résultat du broyage est diluée avec un liquide organique avant que la suspension soit mise sur les particules.

11. Procédé selon l'une quelconque des revendications précédentes, **caractérisé en ce que** la suspension est appliquée sur les particules par pulvérisation ou nébulisation à travers une buse.

12. Procédé selon l'une quelconque des revendications précédentes, **caractérisé en ce que** les particules revêtues avec la suspension sont mises sous forme de poudre avec une poudre hydrophobe, de préférence avec du talc.

13. Utilisation d'une suspension pour le revêtement de particules, la suspension contenant de 25 à 99,8 % en poids d'une phase liquide organique et de 75 à 0,2 % en poids de particules plaquettaires, que l'on obtient par un broyage déstratifiant d'un minéral à structure stratifiée dans une phase organique, et qui ont une granulométrie correspondant à un diamètre sphérique équivalent qui est de 20 µm au maximum.

14. Utilisation d'une suspension selon la revendication 13, **caractérisé en ce que** la suspension est constituée de 25 - 99 % en poids, de préférence de 35 - 90 % en poids d'une phase organique et de 75 - 1 % en poids, de préférence de 65 - 10 % en poids de particules minérales plaquettaires.

15. Utilisation d'une suspension selon la revendication 13 ou 14, **caractérisée en ce que** le minéral est du talc.

16. Utilisation d'une suspension selon la revendication 13 ou 15, **caractérisée en ce que** la phase organique contient une huile, telle qu'une huile minérale, et/ou une cire.

17. Utilisation d'une suspension selon l'une quelconque des revendications 14 à 16 pour le revêtement de granulés fertilisants hygroscopiques et/ou agglomérants.

18. Produit en forme de particules revêtues, **caractérisé en ce qu'**il est constitué de particules qui sont revêtues de particules plaquettaires obtenues par broyage déstratifiant d'un minéral ayant une structure stratifiée dans une phase organique, et ayant une granulométrie correspondant à un diamètre sphérique équivalent qui est de 20 µm au maximum, et avec un liant organique.

19. Produit selon la revendication 18, **caractérisé en ce qu'**il est constitué de granulés fertilisants qui sont pourvus d'un revêtement hydrophobe contenant des particules de talc plaquettaires et une huile et/ou une cire en tant que liant.
